# FASCICULE DE BREVET EUROPEEN

(11) **EP 2 593 487 B1**
(45) Date de publication et mention de la délivrance du brevet: **25.11.2015**
(21) Numéro de dépôt: 11734066.1
(22) Date de dépôt: 12.07.2011
(51) Int. Cl.: C08C 19/28, B60C 1/00, C08C 19/22, C08L 15/00

(54) **POLYMERE GREFFE PAR DES MOLECULES ASSOCIATIVES AZOTEES**
AUF POLYMER GEKRAFTETE ASSOZIIERTE STICKSTOFFMOLEKÜHLE
POLYMERS CRAFTED WITH ASSOTIATIVE AZOTIC MOLECULES

(30) Priorité: 13.07.2010 FR 1002937
(43) Date de publication de la demande: 22.05.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ARAUJO, José, F-63040 CLERMONT-FERRAND Cedex 9 (FR); FAVROT, Jean-Michel, F-63040 CLERMONT-FERRAND Cedex 9 (FR); SALIT, Anne-Frédérique, F-63040 CLERMONT-FERRAND Cedex 9 (FR); SEEBOTH, Nicolas, F-63040 CLERMONT-FERRAND cedex 9 (FR)
(74) Mandataire: Le Cam, Véronique Marie Christine
(86) Numéro de dépôt international: PCT/EP2011/061804
(87) Numéro de publication internationale: WO 2012/007443

(56) Documents cités:
- JP-A- 2008 208 163
- US-A1- 2004 106 744
- US-A1- 2006 084 730
- US-A1- 2006 199 917
- GALIMBERTI M ET AL: "Elastomeric Compounds with Silica. Lower Hysteresis in the Presence of Functionalised Isoprene Oligomers", MACROMOLECULAR SYMPOSIA, WILEY VCH VERLAG, WEINHEIM, DE, vol. 234, no. 1, 1 février 2006 (2006-02-01), pages 203-210, XP002612228, ISSN: 1022-1360, DOI: DOI:10.1002/MASY.200650226 [extrait le 2006-03-13]

## Description

La présente invention concerne un polymère modifié par greffage de molécules associatives azotées le long de la chaîne.

Les polymères modifiés comportant des groupements associatifs le long de la chaîne polymérique sont des polymères comprenant au moins un motif les rendant susceptibles de s'associer entre elles ou avec une charge par des liaisons non covalentes. Un avantage de ces polymères est que ces liaisons physiques sont réversibles sous l'influence de facteurs extérieurs tels que la température ou le temps de sollicitation par exemple. Ainsi, les propriétés mécaniques de ces polymères modifiés sont modulables en fonction des paramètres de l'environnement d'utilisation.

De tels polymères sont par exemple décrits dans le document publié sous le numéro WO2010/031956.

Ce document décrit des élastomères comprenant des chaînes polymères souples associées entre elles d'une part par des ponts de réticulation permanente à liaisons covalentes et d'autre part par des ponts de réticulation à liaisons non covalentes. Les molécules greffées sur les élastomères comportent des groupements associatifs à base d'hétérocycle azoté permettant l'établissement des liaisons physiques. Parmi les groupements associatifs envisagés dans ce document sont cités les groupes imidazolidinyle, triazolyle, triazinyle, bis-uréyle, uréido-pyrimidyle.

Pour modifier les élastomères, on peut les faire réagir avec une molécule comportant d'une part le groupement associatif et d'autre part un groupement réactif formant une liaison covalente avec une fonction réactive portée par l'élastomère. Ceci implique donc une fonctionnalisation préalable de l'élastomère.

C'est la raison pour laquelle des recherches ont été menées sur d'autres procédés de modification de polymères pour introduire des groupements associatifs le long de la chaîne.

Le but de la présente invention est donc de proposer une alternative de modification de polymères applicables à des polymères ne comportant pas de fonctions réactives, par conséquent ne nécessitant pas une pré-fonctionnalisation de l'élastomère.

Ce but est atteint en ce que les inventeurs viennent de découvrir que de nouvelles molécules comprenant à la fois au moins un groupement associatif et au moins un groupement réactif, permettent de modifier un polymère, comprenant au moins une double liaison, sans qu'il ne soit nécessaire que le polymère en question comporte des fonctions réactives.

L'invention a donc pour objet un polymère modifié par greffage d'un composé comprenant au moins un groupement Q, et au moins un groupement A reliés entre eux par au moins et de préférence un groupement « espaceur » Sp dans lequel :
- Q comprend un groupement réactif de motif azo-dicarbonyle,
- A comprend un groupe associatif comprenant au moins un atome d'azote,
- Sp est un atome ou un groupe d'atomes formant une liaison entre Q et A,
le groupe associatif étant choisi parmi un groupe imidazolidinyle, triazolyle, uréyle, bis-uréyle, uréido-pyrimidyle

L'invention a également pour objet un procédé permettant de préparer le polymère modifié défini ci-dessus par greffage de composés comprenant des groupes associatifs azotés, le polymère n'étant pas nécessairement fonctionnalisé.

Un autre objet de l'invention est une composition de caoutchouc comprenant un élastomère, de préférence diénique, modifié par greffage avec le composé comprenant au moins un groupement Q, et au moins un groupement A reliés entre eux par au moins et de préférence un groupement « espaceur » Sp tels que décrits plus haut. En effet, la modification de l'élastomère permet d'assurer une bonne interaction polymère - charge, bénéfique pour les propriétés finales de la composition.

Du fait de cette bonne interaction polymère - charge au sein de la composition de caoutchouc, cette dernière est particulièrement adaptée à la fabrication de pneumatiques. Un pneumatique comprenant une telle composition fait également l'objet de l'invention.

Ainsi l'invention a pour objet un polymère modifié par greffage d'un composé comprenant au moins un groupement Q, et au moins un groupement A reliés entre eux par au moins et de préférence un groupement « espaceur » Sp tels que décrits plus haut.

Par polymère, on entend selon l'invention, tout polymère contenant au moins une insaturation ou double liaison susceptible de réagir sur le composé décrit ci-dessus.

De préférence, les polymères de la présente invention sont des élastomères diéniques.

Ces élastomères diéniques peuvent être classés de manière connue en deux catégories, ceux dits essentiellement insaturés et ceux dits essentiellement saturés. Ces deux catégories d'élastomères diéniques sont envisageables dans le cadre de l'invention.

Un élastomère diénique essentiellement saturé a un taux de motifs ou unités d'origine diénique faible ou très faible (diènes conjugués) qui est toujours inférieur à 15% (% en moles). C'est ainsi, par exemple, que certains caoutchoucs butyle ou copolymères de diènes et d'alpha-oléfines type EPDM entrent dans la définition d'élastomères diéniques essentiellement saturés.

A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On entend plus particulièrement par élastomère diénique susceptible d'être utilisé dans l'invention:
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone;
(c) - un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène; de tels polymères sont décrits en particulier dans les documents WO 2004/035639A1 et US 2005/0239639A1 ;
(d) - un copolymère d'isobutène et d'isoprène (caoutchouc butyle), ainsi que les versions halogénées, en particulier chlorées ou bromées, de ce type de copolymères.

Bien qu'elle s'applique à tout type d'élastomère diénique, on préfère utiliser au moins un élastomère diénique du type fortement insaturé en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant randomisant employées. Les élastomères peuvent être par exemple à blocs, statistiques, séquencés, microséquencés, et être préparés en dispersion, en émulsion ou en solution ; ils peuvent être couplés et/ou étoilés ou encore fonctionnalisés avec un agent de couplage et/ou d'étoilage ou de fonctionnalisation.

Conviennent en particulier les élastomères diéniques choisis dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par le caoutchouc naturel, les homopolymères et copolymères de l'isoprène tels que les copolymères d'isoprène-butadiène (BIR), les copolymères d'isoprène- styrène (SIR), les copolymères d'isoprène-butadiène-styrène (SBIR), et les mélanges de tels copolymères.

Selon l'invention, le polymère possédant au moins une insaturation ou double liaison est modifié par greffage d'un composé, appelé également agent de modification, comprenant au moins un groupement Q, et au moins un groupement A reliés entre eux par au moins et de préférence un groupement « espaceur » Sp dans lequel :
- Q comprend un groupement azo-dicarbonyle,
- A comprend un groupe associatif comprenant au moins un atome d'azote,
- Sp est un atome ou un groupe d'atomes formant une liaison entre Q et A,
le groupe associatif étant choisi parmi un groupe imidazolidinyle, triazolyle, uréyle, bis-uréyle, uréido-pyrimidyle

Par « groupe associatif », on entend des groupes susceptibles de s'associer les uns aux autres par des liaisons hydrogène, ioniques et/ou hydrophobes. Il s'agit selon un mode préféré de l'invention de groupes susceptibles de s'associer par des liaisons hydrogène.

Lorsque les groupes associatifs sont susceptibles de s'associer par des liaisons hydrogène, chaque groupe associatif comporte au moins un « site » donneur et un site accepteur vis-à-vis de la liaison hydrogène de sorte que deux groupes associatifs identiques sont auto-complémentaires et peuvent s'associer entre eux en formant au moins deux liaisons hydrogène.

Les groupes associatifs selon l'invention sont également susceptibles de s'associer par des liaisons hydrogène, ioniques et/ou hydrophobes à des fonctions présentes sur des charges.

Les composés selon l'invention comportant un groupement Q, un groupement « espaceur » et un groupement associatif peuvent par exemple être représentés par la formule (Ia) suivante :

A-Sp-Q (Ia).

Les composés selon l'invention comportant un groupement Q, un groupement « espaceur » et deux groupements associatifs peuvent par exemple être représentés par la formule (Ib) suivante :

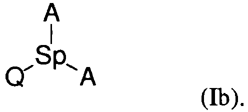

De manière similaire, les composés selon l'invention comportant deux groupements Q, un groupement « espaceur » et un groupement associatif peuvent par exemple être représentés par la formule (Ic) suivante :

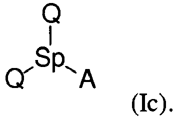

Selon le même principe, les composés selon l'invention comportant deux groupements Q, un groupement « espaceur » et deux groupements associatifs peuvent par exemple être représentés par la formule (Id) suivante :

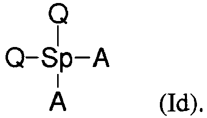

De préférence, le groupement A répond à l'une des formules (II) à (VI) suivantes : 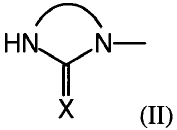 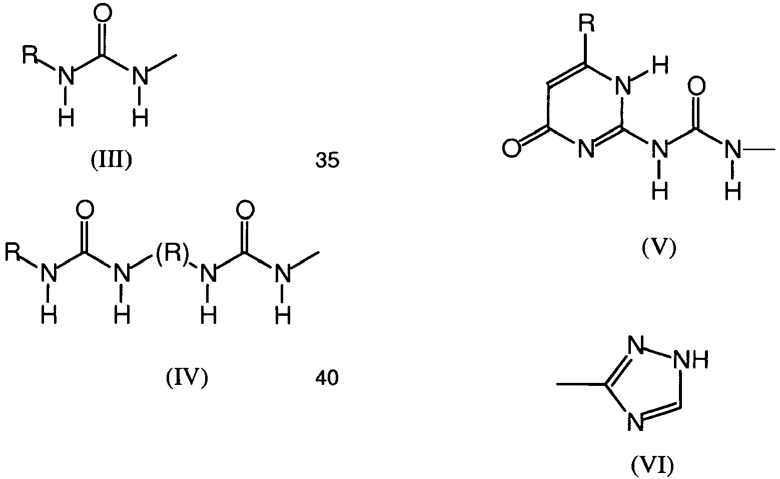 où :
- R désigne un groupement hydrocarboné pouvant éventuellement contenir des hétéroatomes,
- X désigne un atome d'oxygène ou de soufre, ou un groupement -NH, de préférence un atome d'oxygène.

De préférence, le groupement A comprend un hétérocycle di ou triazoté, à 5 ou 6 atomes, de préférence diazoté, et comprenant au moins une fonction carbonyle.

De manière encore plus préférée, le groupement A comprend un groupe imidazolidinyle de formule (II).

Le groupement Q comprend un groupement azo-dicarbonylé répondant de préférence à la formule:

W-CO-N=N-CO-.

dans laquelle,
W représente
un groupement de formule :

R'-Z -

dans lequel :
- Z représente un atome d'oxygène, de soufre ou un groupe -NH ou NR',
- R' représente un groupe alkyle en C₁-C₂₀, de préférence un alkyle en C₁-C₆, et de manière tout à fait préférée C₁-C₄ , par exemple le méthyle ou l'éthyle,
ou
un groupement de formule :

- Sp'-A'

dans laquelle :
- Sp', identique ou différent de Sp est un groupement espaceur divalent reliant le groupe fonctionel azodicarbonylé à un autre groupe associatif A',
- A', identique ou différent de A, est un groupe associatif comprenant au moins un atome d'azote,

De préférence, les agents de modification selon l'invention sont représentés par la formule (VII)

W-CO-N=N-CO-Sp-A (VII)

dans laquelle W, Sp et A sont tels que définis précédemment et A, Sp et Sp' peuvent comporter un ou plusieurs hétéroatomes.

Par exemple, des agents de modification selon l'invention sont représentés par les formules (VIII) ou (IX) :

R'-Z-CO-N=N-CO-Sp-A (VIII)

ou

A'-Sp'-CO-N=N-CO-Sp-A (IX)

dans lesquelles R', Z, Sp, A, Sp' et A' sont tels que définis précédemment et A, Sp et Sp' peuvent comporter un ou plusieurs hétéroatomes.

Le groupement « espaceur » Sp permet de relier au moins un groupement Q et/ou au moins un groupement associatif, A, et ainsi peut être de tout type connu en soi. Le groupement « espaceur » ne doit cependant pas, ou peu, interférer avec les groupements Q et associatif du composé selon l'invention.

Le groupement « espaceur » est de préférence une chaîne hydrocarbonée, linéaire, ramifiée, cyclique, peut contenir un ou plusieurs radicaux aromatiques, et/ou un ou plusieurs hétéroatomes. Ladite chaîne peut éventuellement être substituée, pour autant que les substituants soient inertes vis-à-vis des groupements Q et associatif.

Selon un mode de réalisation préféré, le groupement « espaceur » est une chaîne alkyle linéaire ou ramifiée en C1-C24, de préférence C1-C10 éventuellement comprenant un ou plusieurs hétéroatomes choisis parmi les atomes d'azote, de soufre, de silicium ou d'oxygène, plus préférentiellement une chaîne alkyle linéaire en C1-C6;

De manière tout à fait préférée, le groupement « espaceur » Sp ou Sp' est choisi parmi -(CH2)y-, -NH-(CH2)y-, -O-(CH2)y-, y étant un entier de 1 à 6. De préférence, l'agent de modification selon l'invention est choisi parmi les composés de formule (X) ou (XI) suivantes : 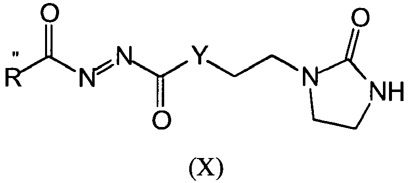 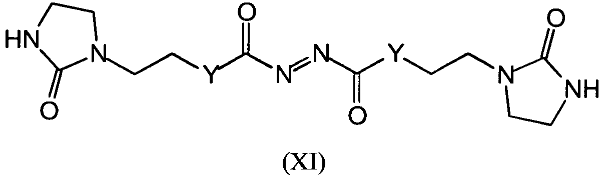 dans lesquelles :
- Y représente un groupe divalent choisi parmi un groupe méthylène, un atome d'oxygène, de soufre et un groupe NH-, et
- R" représente un groupe alcoxy en C1-C6, de préférence un alcoxy en C1-C4 et de manière tout à fait préférée le méthoxy ou l'éthoxy.

De manière encore plus préférentielle l'agent de modification selon l'invention peut être choisi parmi les composés de formules (XII) à (XV) ci-dessous :

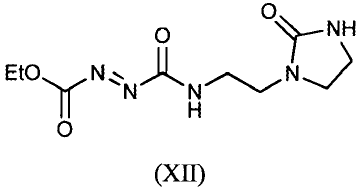

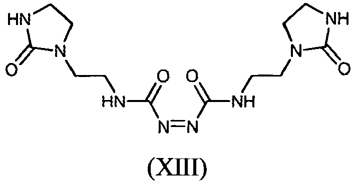

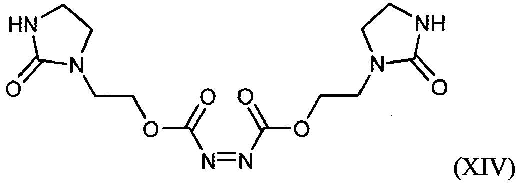

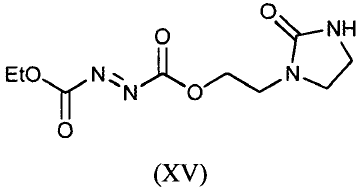

Les agents de modification selon l'invention peuvent être préparés en trois étapes selon le schéma général suivant : 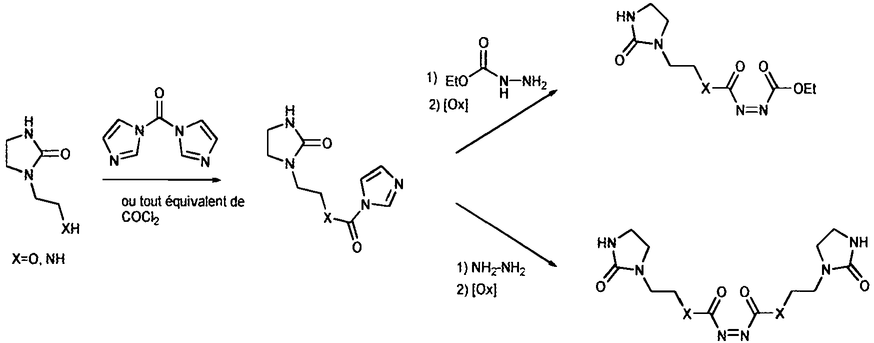 ou encore par réaction directe sur un dialkylazodicarboxylate ou un dialkylhydrazodicarboxylate selon le schéma réactionnel suivant :

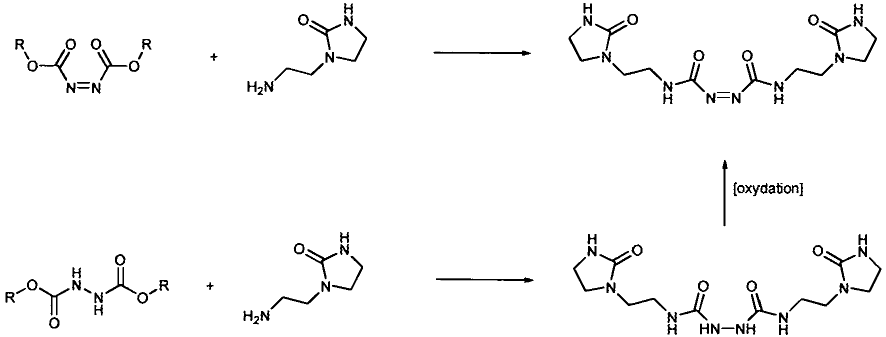

Selon un mode de réalisation préféré, le taux d'agent de modification varie de 0,01 à 50% molaire, de préférence de 0,01 à 5% molaire.

L'invention a également pour objet le procédé de préparation de l'élastomère greffé décrit plus haut.

Le greffage du polymère se fait par réaction dudit polymère avec le ou les groupes réactifs portés par l'agent de modification. Lors de cette réaction, ce ou ces groupes réactifs forment des liaisons covalentes avec la chaîne du polymère.

Le greffage de l'agent de modification est effectué par "ène réaction" sur au moins une insaturation ou double liaison de la chaîne. La modification ne s'effectue pas par réaction avec d'éventuelles groupes fonctionnels du polymère. On peut illustrer cette "ène-réaction" par le mécanisme sur un polyisoprène décrit ci-dessous:

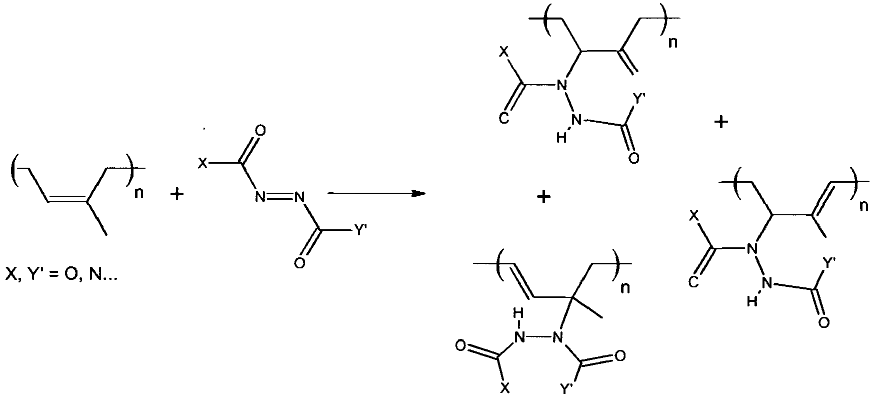

Le greffage de l'agent de modification peut être réalisé en masse, par exemple dans un mélangeur interne ou un mélangeur externe tel qu'un mélangeur à cylindres. Le greffage est alors mis en oeuvre soit à une température du mélangeur externe ou du mélangeur interne inférieure à 60°C, suivi d'une étape de réaction sous presse ou en étuve à des températures allant de 80°C à 200°C, soit à une température du mélangeur externe ou du mélangeur interne supérieure à 60°C sans traitement thermique postérieur.

Le greffage de l'agent de modification peut également être réalisé en solution.

Le procédé de greffage peut être effectué en continu ou en discontinu. Le polymère ainsi modifié peut être séparé de sa solution par tout type de moyen connu par l'homme de l'art et en particulier par une opération de stripping à la vapeur d'eau.

L'élastomère greffé selon l'invention peut être utilisé pour la fabrication de divers articles en caoutchouc selon des procédés connus de l'homme de l'art. Il est alors mis en oeuvre au sein d'une composition de caoutchouc avec divers autres composants.

Ainsi, l'invention a également pour objet une composition de caoutchouc réticulée ou réticulable renforcée comprenant un élastomère greffé tel que décrit plus haut. A titre d'agents de renforcement, on peut citer les charges renforçantes minérale, telles que la silice, et les charges renforçantes organiques, telles que le noir de carbone.

On peut envisager d'ajouter à cette composition des additifs conventionnels aux compositions de caoutchouc selon leur utilisation, tels que des solvants, des plastifiants, des agents de réticulation, des pigments...

Selon une application possible d'une telle composition de caoutchouc, on peut citer la fabrication de pneumatique pour véhicule. La composition de caoutchouc, une fois réticulée, peut ainsi être calandrée ou encore extrudée sous la forme d'un profilé de caoutchouc utilisable comme semi-fini de pneumatique pour véhicule.

L'invention ainsi que ses avantages seront aisément compris à la lumière des exemples de réalisation qui suivent.

### EXEMPLES DE REALISATION

La détermination du taux d'ethyl 2-(2-(2-oxoimidazolidin-1-yl)ethylcarbamoyl)hydrazinecarboxylate greffé est réalisée par une analyse RMN. Les spectres sont acquis sur un spectromètre 500 MHz BRUKER équipé d'une sonde " large bande " BBIz-grad 5 mm. L'expérience RMN ¹H quantitative, utilise une séquence simple impulsion 30° et un délai de répétition de 3 secondes entre chaque acquisition. Les échantillons sont solubilisés dans le sulfure de carbone (CS₂). 100 µL de cyclohexane deutéré (C₆D₁₂) sont ajoutés pour le signal de lock.

Le spectre RMN ¹H permet de quantifier les motifs d'ethyl 2-(2-(2-oxoimidazolidin-1-yl)ethylcarbamoyl)hydrazinecarboxylate greffés par intégration des signaux caractéristiques des protons CH₂O qui apparaissent à un déplacement chimique de δ= 3.94 ppm.

Le spectre RMN 2D HSQC ¹H-¹³C permet de vérifier la nature du motif greffé grâce aux déplacements chimiques des atomes de carbone et de proton.

### Exemple 1 : Modification en solution d'un polyisoprène synthétique comprenant plus de 90% d'enchaînements 1,4-cis.

### 1.1 - Préparation du (E)-ethyl 2-(2-(2-oxoimidazolidin-1-yl)ethylcarbamoyl)diazenecarboxylate

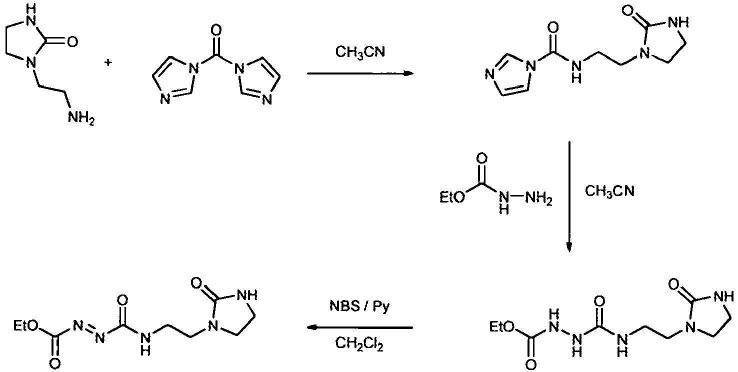

### a) Préparation du N-(2-(2-oxoimidazolidin-1-yl)ethyl)-1H-imidazole-1-carboxamide

La N-(2-(2-oxoimidazolidin-1-yl)ethyl)-1H-imidazole-1-carboxamide est préparée selon le mode opératoire suivant :

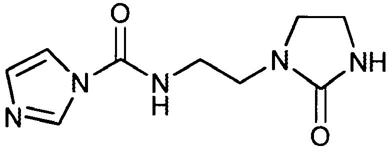

A une solution de 1-(2-aminoethyl)imidazolidin-2-one (46.5g, 0.36 mol) dans l'acétonitrile anhydre (750mL) est ajouté en une fois le carbonyldiimidazole (64.2g, 0.4 mol). Le milieu réactionnel est ensuite agité pendant 3 à 5 heures à température ambiante. Le précipité obtenu est filtré et lavé sur le filtre par de l'acétonitrile sec (3 fois 40 mL) et l'éther de pétrole (2 fois 50 mL, coupe 40/60°C) et enfin séché pendant 10 - 15 heures à température ambiante.

Un solide blanc (74.5 g, rendement 93 %) de point de fusion 154 °C est obtenu. La pureté molaire est de 88 % mol. (RMN ¹H).

Caractérisation RMN ¹H, ¹³C, ¹⁵N

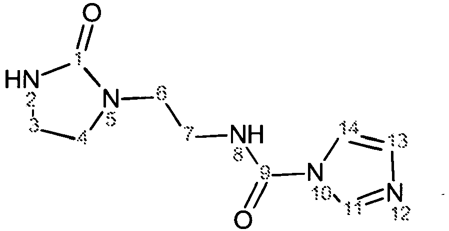

| **Atome** | **δ ¹H (ppm) + mult.** | **δ ¹³C (ppm)** | **δ ¹⁵N (ppm)** |
|---|---|---|---|
| **1** | - | 162.4 | - |
| **2** | 6.26 (s) | - | -302.7 (¹J_{1H-15N} = 90Hz) |
| **3** | 3.15 (t) | 37.5 | - |
| **4** | 3.34 (t) | 44.7 | - |
| **5** | - | - | -299.2 |
| **6** | 3.17 (t) | 42.5 | - |
| **7** | 3.28 (t) | 38.4 | - |
| **8** | 8.53 | - | -286.3 (¹J_{1H-15N} = 90Hz) |
| **9** | - | 148.8 | - |
| **10** | - | - | -185.1 |
| **11** | 8.14 (s) | 135.9 | - |
| **12** | - | - | -112.6 |
| **13** | 6.95 (s) | 139.5 | - |
| **14** | 7.57 (s) | 116.6 | - |

Solvant utilisé : DMSO - Calibration sur le signal du DMSO à 2.44 ppm en ¹H, 39.5 ppm en ¹³C et sr=19238,46 en ¹⁵N

### b) Préparation de l'ethyl 2-(2-(2-oxoimidazolidin-1-yl)ethylcarbamoyl)hydrazinecarboxylate

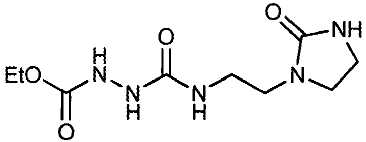

Au N-(2-(2-oxoimidazolidin-1-yl)ethyl)-1H-imidazole-1-carboxamide (74,0 g, 0,33 mol, pureté 88 % mol par RMN) dans l'acétonitrile anhydre (750 mL) est ajouté en une fois l'ethyl hydrazinecarboxylate (38,0 g, 0,36 mol). Le milieu réactionnel est agité pendant 3 heures à 70-75 °C puis pendant 2-3 heures à température ambiante. Le précipité est filtré et lavé par de l'acétonitrile (2 fois 50 mL) et de l'éther de pétrole (2 fois 50 mL, coupe 40/60°C) et enfin séché pendant 10 - 15 heures à température ambiante.

Un solide blanc (79,6 g, rendement 93 %) de point de fusion 179 °C est obtenu. La pureté molaire est supérieure à 99 % (RMN ¹H).

Caractérisation RMN ¹H, ¹³C, ¹⁵N

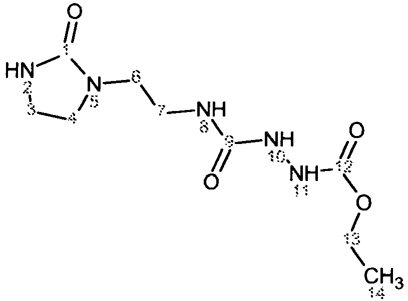

| **Atome** | **δ ¹H (ppm) + mult.** | **δ ¹³C (ppm)** | **δ¹⁵N** (**ppm**) |
|---|---|---|---|
| **1** | - | 162.4 | - |
| **2** | 6.20 | - | -303.1 (¹J_{1H-15N}= 90Hz) |
| **3** | 3.13 (t) | 37.6 | - |
| **4** | 3.28 (t) | 45.0 | - |
| **5** | - | - | -298.2 |
| **6** | 2.99 (t) | 43.4 | - |
| **7** | 3.04 (t) | 37.9 | - |
| **8** | 6.33/7.69/8.30/8.68* | - | -301.3* |
| **9** | - | 158.3 | - |
| **10** | 6.33/7.69/8.30/8.68* | - | -301.3* |
| **11** | 6.33/7.69/8.30/8.68* | - | -301.3* |
| **12** | - | 156.9 | - |
| **13** | 3.96 (q) | 60.4 | - |
| **14** | 1.11 (t) | 14.6 | - |

| | | | |
|---|---|---|---|
| * Les protons 8, 10 et 11 étant des groupements NH, leur déplacement chimique ¹H ne peut être exactement attribué. Le déplacement chimique ¹³C correspond au groupement 8. | | | |

Solvant utilisé : DMSO - Calibration sur le signal du DMSO à 2.44 ppm en ¹H, 39.5 ppm en ¹³C et sr=19238,46 en ¹⁵N

### c) Préparation d'ethyl 2-(2-(2-oxoimidazolidin-1-yl)ethylcarbamoyl)diazenecarboxylate, composé selon l'invention

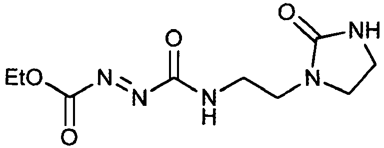

A un mélange de pyridine (3,05 g, 0,039 mol) et d'hydrazinecarboxylate OU-IMIA-02 (10,00 g, 0,039 mol) dans le dichlorométhane (200 mL), refroidi à 5 - 10 °C est ajouté en une fois le N-bromosuccinimide (6,87 g, 0,039 mol) dans le dichlorométhane (100 mL). Le milieu réactionnel est agité pendant 1 heure à 3+10 °C puis la phase organique est lavée par de l'eau (2 fois 150 mL). La phase organique est ensuite séchée pendant 15 minutes sur Na₂SO₄ puis les solvants sont évaporés sous pression (T_{bain} 18 °C, 40-50 mbar). De l'éther diéthylique (300 mL) est ajouté et le milieu réactionnel est agité pendant 30-40 minutes à température ambiante. Le précipité obtenu est filtré et lavé sur le filtre par de l'éther diéthylique (3 fois 40 mL) et enfin séché pendant 10 - 15 heures à température ambiante.

Un solide jaune (6,95 g, rendement 70 %) de point de fusion 122 °C est obtenu.

La pureté molaire est supérieure à 95 % (RMN ¹H).

Une caractérisation RMN ¹H, ¹³C est présentée dans le tableau 1 suivant.

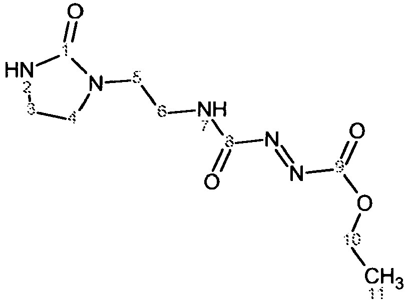

**Tableau 1**

| **Atome** | **δ ¹H (ppm) + mult.** | **δ ¹³C (ppm)** |
|---|---|---|
| **1** | - | 162.20 |
| **2** | 6.27/9.12 * | - |
| **3** | 3.15 (t) | 37.46 |
| **4** | 3.32 (t) | 44.59 |
| **5** | 3.17 (t) | 42.41 |
| **6** | 3.31 (t) | 38.44 |
| **7** | 6.227/9.12* | - |
| **8** | - | 160.42/161.25 |
| **9** | - | 160.42/161.25 |
| **10** | 4.41 (q) | 65.24 |
| **11** | 1.28 (t) | 13.83 |

| | | |
|---|---|---|
| * Les protons 2 et 7 étant des groupements NH, leur déplacement chimique ¹H ne peut être exactement attribué. | | |

Solvant utilisé : DMSO - Calibration sur le signal du DMSO à 2.44 ppm en ¹H, 39.5 ppm en ¹³C

### 1.2 - Greffage de l'agent de modification sur le polyisoprène

A 70 g de polyisoprène (contenant 97,3% massique d'unité isoprène-1,4 et de Mn = 319 000 g/mol et Ip = 2,57) en solution dans 1,4 L de THF est ajoutée une solution de 2,13g d'ethyl 2-(2-(2-oxoimidazolidin-1-yl)ethylcarbamoyl)diazenecarboxylate dans 50 mL de dichlorométhane. Le milieu réactionnel est agité pendant 7 h à 70°C et le polymère est ensuite coagulé dans un mélange acétone/méthanol. Le polymère est remis en solution dans du toluène puis soumis à un traitement antioxydant par addition de 0,14 g de 4,4'-methylène-bis-2,6-tert-butylphenol et 0,14 g de N-(1,3-dimethylbutyl)-N'-phényl-p-phénylènediamine. Le polymère est séché sous vide pendant 48h à 60 °C.

L'analyse par RMN ¹H indique que le polymère a été modifié à hauteur de 0,21 % molaire ce qui équivaut à un rendement de greffage de 40 %.

## Revendications

1. Polymère modifié obtenu par greffage d'un composé comprenant au moins un groupement Q, et au moins un groupement A reliés entre eux par au moins et de préférence un groupement « espaceur » Sp dans lequel :
- Q comprend un groupement azo-dicarbonylé,
- A comprend un groupe associatif comprenant au moins un atome d'azote,
- Sp est un atome ou un groupe d'atomes formant une liaison entre Q et A,
le groupe associatif étant choisi parmi un groupe imidazolidinyle, triazoyle, uréyle, bis-uréyle, uréido-pyrimidyle.

2. Polymère modifié selon la revendication 1, **caractérisé en ce que** le polymère est un élastomère diénique.

3. Polymère modifié selon la revendication 1 ou 2, **caractérisé en ce que** l'élastomère diénique est essentiellement saturé, de préférence choisi parmi les copolymères d'éthylène-propylène-diène monomère (EPDM), les caoutchoucs butyle.

4. Polymère modifié selon la revendication 1 ou 2, **caractérisé en ce que** l'élastomère diénique est essentiellement insaturé, de préférence choisi parmi le caoutchouc naturel, les polyisoprènes de synthèse, les copolymères d'isoprène et les mélanges de ces élastomères.

5. Polymère modifié selon l'une quelconque des revendications 1 à 4, **caractérisé en ce que** le groupement A répond à l'une des formules (II) à (VI) suivantes : 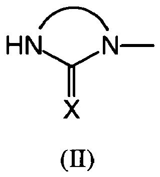 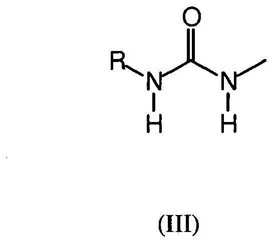 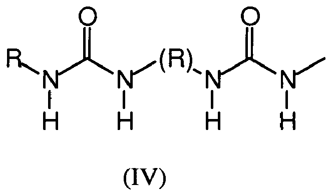 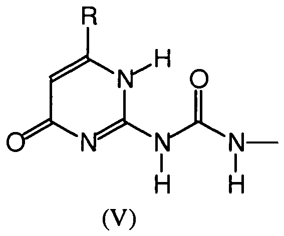 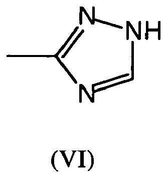 où :
- R désigne un groupement hydrocarboné pouvant éventuellement contenir des hétéroatomes,
- X désigne un atome d'oxygène, de soufre ou un groupement -NH, de préférence un atome d'oxygène.

6. Polymère modifié selon l'une quelconque des revendications 1 à 5 **caractérisé en ce que** l'agent de modification est représenté par la formule (VII)
W-CO-N=N-CO-Sp-A (VII)
dans laquelle :
- A est un groupe associatif comprenant au moins un atome d'azote,
- Sp est un groupement espaceur divalent reliant le groupe fonctionel azodicarbonylé au groupe associatif A,
- W représente
W représente
un groupement de formule :
R'-Z-
dans lequel :
• - Z représente un atome d'oxygène, de soufre ou un groupe -NH, ou -NR',
• - R' représente un groupe alkyle en C₁-C₂₀, de préférence un alkyle en C₁-C₆,
et de manière tout à fait préférée C₁-C₄ , par exemple le méthyle ou l'éthyle,
ou
un groupement de formule :
- Sp'-A'
dans laquelle :
• Sp', identique ou différent de Sp est un groupement espaceur divalent reliant le groupe fonctionel azodicarbonylé à un autre groupe associatif A',
• A', identique ou différent de A, est un groupe associatif comprenant au moins un atome d'azote,

7. Polymère modifié selon la revendication 6 **caractérisé en ce que** l'agent de modification est choisi parmi les composés de formule (VIII) ou (IX) suivantes:
R'-Z-CO-N=N-CO-Sp-A (VIII)
ou
A'-Sp'-CO-N=N-CO-Sp-A (IX)
dans lesquelles R', Z, Sp, A, Sp' et A' sont tels que définis dans les revendications précédentes et A, Sp et Sp' peuvent comporter un ou plusieurs hétéroatomes.

8. Polymère modifié selon la revendication 7 **caractérisé en ce que** l'agent de modification est choisi parmi les composés de formule (X) ou (XI) suivantes: 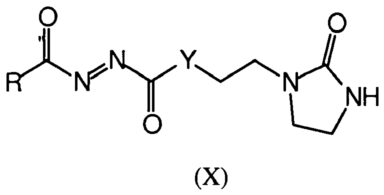 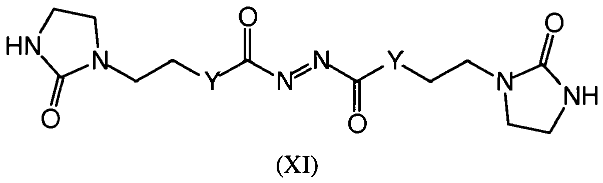 dans lesquelles :
- Y représente un groupe divalent choisi parmi un groupe méthylène, un atome d'oxygène, de soufre et un groupe -NH-, et
- R" représente un groupe alcoxyle C1-C6, de préférence un alcoxyle en C1-C4 et de manière tout à fait préférée le méthoxyle ou l'éthoxyle.

9. Polymère modifié selon l'une quelconque des revendications 1 à 8 **caractérisé en ce que** le groupement « espaceur » Sp ou Sp' de l'agent de modification est choisi parmi -(CH2)y-, -NH-(CH2)y-, -O-(CH2)y-, y étant un entier de 1 à 6.

10. Polymère modifié selon l'une quelconque des revendications 8 et 9 **caractérisé en ce que** l'agent de modification est choisi parmi les composés de formule (XII) à (XV) suivantes:

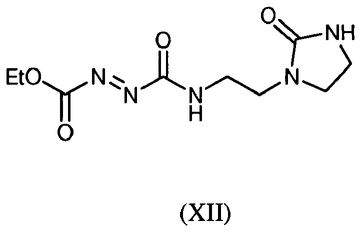

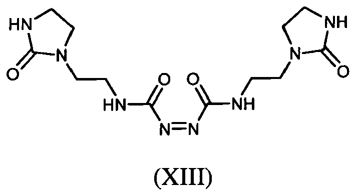

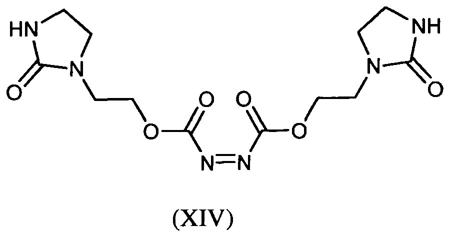

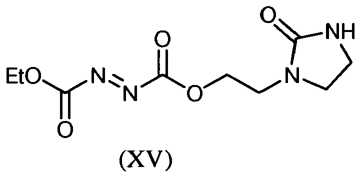

11. Procédé de préparation d'un polymère modifié comprenant une étape de greffage sur un polymère comportant au moins une insaturation d'un composé comprenant au moins un groupement Q, et au moins un groupement A reliés entre eux par au moins et de préférence un groupement « espaceur » Sp dans lequel :
- Q comprend un groupement azo-carbonylé,
- A comprend un groupe associatif comprenant au moins un atome d'azote,
- Sp est un atome ou un groupe d'atomes formant une liaison entre Q et A, par "ène-réaction" du groupement Q sur ladite insaturation.

12. Procédé de préparation d'un polymère modifié selon la revendication 11 **caractérisé en ce que** le polymère est un élastomère diénique.

13. Procédé de préparation d'un polymère modifié selon l'une quelconque des revendications 11 à 12 **caractérisé en ce que** l'agent de modification est tel que défini dans l'une quelconque des revendications 1 à 10.

14. Composition de caoutchouc réticulée ou réticulable comprenant une charge renforçante et un polymère tel que défini dans les revendications 1 à 10.

15. Pneumatique comprenant une composition de caoutchouc telle que définie dans la revendication 14

## Patentansprüche

1. Modifiziertes Polymer, erhalten durch Pfropfen einer Verbindung mit mindestens einer Gruppe Q und mindestens einer Gruppe A, die über mindestens und vorzugsweise eine Spacergruppe Sp miteinander verbunden sind, wobei:
- Q eine Azodicarbonylgruppierung umfasst,
- A eine assoziative Gruppe mit mindestens einem Stickstoffatom umfasst,
- Sp für ein Atom oder eine Gruppe von Atomen, das bzw. die eine Bindung zwischen Q und A bildet,
steht,
wobei die assoziative Gruppe aus einer Imidazolidinyl-, Triazolyl-, Ureyl-, Bisureyl- oder Ureidopyrimidylgruppe ausgewählt ist.

2. Modifiziertes Polymer nach Anspruch 1, **dadurch gekennzeichnet, dass** es sich bei dem Polymer um ein Dienelastomer handelt.

3. Modifiziertes Polymer nach Anspruch 1 oder 2, **dadurch gekennzeichnet, dass** das Dienelastomer im Wesentlichen gesättigt ist und vorzugsweise aus Ethylen-Propylen-Dienmonomer-Copolymeren (EPDM-Copolymeren) und Butylkautschuken ausgewählt ist.

4. Modifiziertes Polymer nach Anspruch 1 oder 2, **dadurch gekennzeichnet, dass** das Dienelastomer im Wesentlichen ungesättigt ist und vorzugsweise aus Naturkautschuk, synthetischen Polyisoprenen, Isopren-Copolymeren und Mischungen dieser Elastomere ausgewählt ist.

5. Modifiziertes Polymer nach einem der Ansprüche 1 bis 4, **dadurch gekennzeichnet, dass** die Gruppe A einer der folgenden Formeln (II) bis (VI) entspricht: 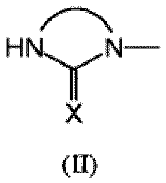 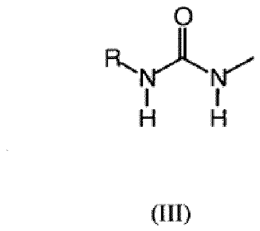 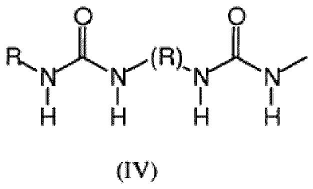 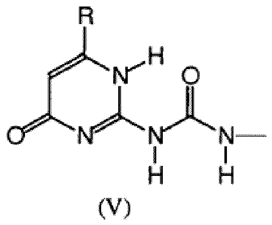 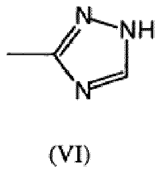 wobei:
- R für eine Kohlenwasserstoffgruppe, die gegebenenfalls Heteroatome enthalten kann, steht,
- X für ein Sauerstoff- oder Schwefelatom oder eine Gruppe -NH, vorzugsweise ein Sauerstoffatom, steht.

6. Modifiziertes Polymer nach einem der Ansprüche 1 bis 5, **dadurch gekennzeichnet, dass** das Modifizierungsmittel durch die Formel (VII) dargestellt wird:
W-CO-N=N-CO-Sp-A (VII)
worin:
- A für eine assoziative Gruppe mit mindestens einem Stickstoffatom steht,
- Sp für eine zweiwertige Spacergruppe, die die azodicarbonylfunktionelle Gruppe mit der assoziativen Gruppe A verbindet, steht,
- W für
eine Gruppe der Formel:
R'-Z-
worin:
• - Z für ein Sauerstoff- oder Schwefelatom oder eine Gruppe -NH oder -NR' steht,
• - R' für eine C₁-C₂₀-Alkylgruppe, vorzugsweise C₁-C₆-Alkylgruppe und ganz besonders bevorzugt C₁-C₄-Alkylgruppe, beispielsweise Methyl oder Ethyl, steht,
oder
eine Gruppe der Formel:
-Sp'-A'
worin:
• Sp', das mit Sp identisch oder davon verschieden ist, für eine zweiwertige Spacergruppe, die die azodicarbonylfunktionelle Gruppe mit einer anderen assoziativen Gruppe A' verbindet, steht,
• A', das mit A identisch oder davon verschieden ist, für eine assoziative Gruppe mit mindestens einem Stickstoffatom steht, steht.

7. Modifiziertes Polymer nach Anspruch 6, **dadurch gekennzeichnet, dass** das Modifizierungsmittel aus den Verbindungen der folgenden Formeln (VIII) oder (IX) ausgewählt ist:
R'-Z-CO-N=N-CO-Sp-A (VIII)
oder
A'-Sp'-CO-N=N-CO-Sp-A (IX) worin R', Z, Sp, A, Sp' und A' wie in den vorhergehenden Ansprüche definiert sind und A, Sp und Sp' ein oder mehrere Heteroatome enthalten können.

8. Modifiziertes Polymer nach Anspruch 7, **dadurch gekennzeichnet, dass** das Modifizierungsmittel aus den Verbindungen der folgenden Formeln (X) oder (XI) ausgewählt ist: 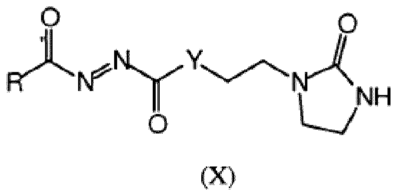 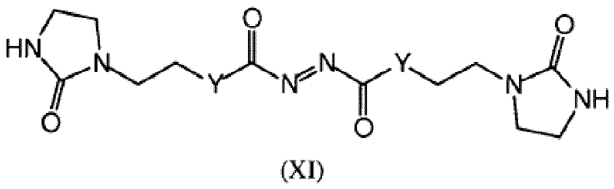 worin:
- Y für eine zweiwertige Gruppe, die aus einer Methylengruppe, einem Sauerstoff- oder Schwefelatom und einer Gruppe -NH- ausgewählt ist, steht und
- R" für eine C1-C6-Alkoxygruppe, vorzugsweise eine C1-C4-Alkoxygruppe und ganz besonders bevorzugt Methoxy oder Ethoxy steht.

9. Modifiziertes Polymer nach einem der Ansprüche 1 bis 8, **dadurch gekennzeichnet, dass** die Spacergruppe Sp oder Sp' des Modifizierungsmittels aus -(CH2)y-, -NH-(CH2)y-, -O-(CH2)y- ausgewählt ist, wobei y für eine ganze Zahl von 1 bis 6 steht.

10. Modifiziertes Polymer nach einem der Ansprüche 8 und 9, **dadurch gekennzeichnet, dass** das Modifizierungsmittel aus den Verbindungen der folgenden Formeln (XII) bis (XV) ausgewählt ist:

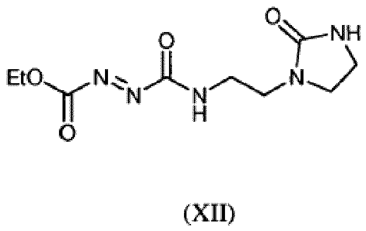

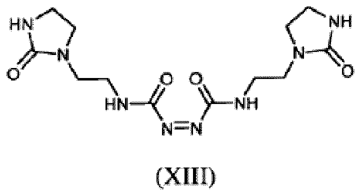

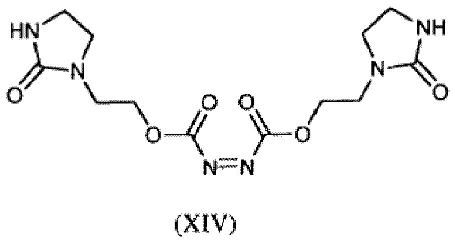

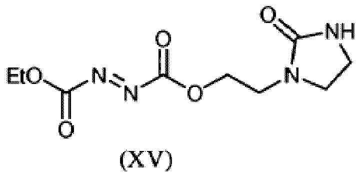

11. Verfahren zur Herstellung eines modifizierten Polymers, bei dem man auf ein Polymer mit mindestens einer Ungesättigtheit eine Verbindung mit mindestens einer Gruppe Q und mindestens einer Gruppe A, die über mindestens und vorzugsweise eine Spacergruppe Sp miteinander verbunden sind, wobei:
- Q eine Azocarbonylgruppierung umfasst,
- A eine assoziative Gruppe mit mindestens einem Stickstoffatom umfasst,
- Sp für ein Atom oder eine Gruppe von Atomen, das bzw. die eine Bindung zwischen Q und A bildet, steht,
durch "En-Reaktion" der Gruppe Q mit der Ungesättigtheit aufpfropft.

12. Verfahren zur Herstellung eines modifizierten Polymers nach Anspruch 11, **dadurch gekennzeichnet, dass** es sich bei dem Polymer um ein Dienelastomer handelt.

13. Verfahren zur Herstellung eines modifizierten Polymers nach einem der Ansprüche 11 bis 12, **dadurch gekennzeichnet, dass** das Modifizierungsmittel wie in einem der Ansprüche 1 bis 10 definiert ist.

14. Vernetzte oder vernetzbare Kautschukzusammensetzung, umfassend einen verstärkenden Füllstoff und ein Polymer gemäß einem der Ansprüche 1 bis 10.

15. Reifen, umfassend eine Kautschukzusammensetzung gemäß Anspruch 14.

## Claims

1. Modified polymer obtained by grafting a compound comprising at least one group Q, and at least one group A bonded together by at least, and preferably, one "spacer" group Sp in which:
- Q comprises an azo-dicarbonyl-containing group,
- A comprises an associative group comprising at least one nitrogen atom,
- Sp is an atom or a group of atoms forming a bond between Q and A,
the associative group is selected from an imidazolidinyl, triazolyl, ureyl, bisureyl and ureido-pyrimidyl group.

2. Modified polymer according to Claim 1, **characterized in that** the polymer is a diene elastomer.

3. Modified polymer according to Claim 1 or 2, **characterized in that** the diene elastomer is essentially saturated, preferably selected from copolymers of ethylenepropylene-diene monomer (EPDM), butyl rubbers.

4. Modified polymer according to Claim 1 or 2, **characterized in that** the diene elastomer is essentially unsaturated, preferably selected from natural rubber, synthetic polyisoprenes, isoprene copolymers and mixtures of these elastomers.

5. Modified polymer according to any one of Claims 1 to 4, **characterized in that** the group A corresponds to one of the following formulae (II) to (VI): 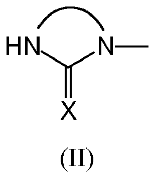 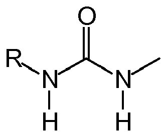 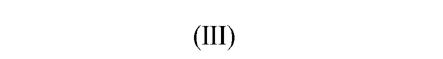 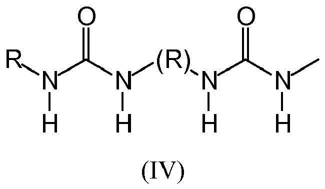 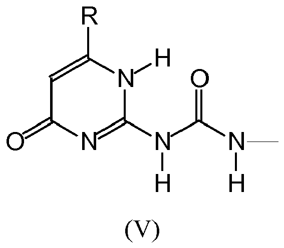 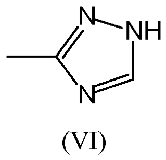 where:
- R denotes a hydrocarbon group which may optionally contain heteroatoms,
- X denotes an oxygen or sulphur atom, or a group -NH, preferably an oxygen atom.

6. Modified polymer according to any one of Claims 1 to 5, **characterized in that** the modifying agent is represented by the formula (VII)
W-CO-N=N-CO-Sp-A (VII)
in which:
- A is an associative group comprising at least one nitrogen atom,
- Sp is a divalent spacer group bonding the azodicarbonyl-containing functional group to the associative group A,
- W represents
W represents
a group of formula:
R'-Z-
in which:
• - Z represents an oxygen or sulphur atom or a group -NH or -NR',
• - R' represents a C₁-C₂₀ alkyl, preferably C₁-C₆ alkyl, and most preferably C₁-C₄ alkyl, group, for example methyl or ethyl,
or
a group of formula:
- Sp'-A'
in which:
• Sp', which is identical to or different from Sp, is a divalent spacer group bonding the azodicarbonyl-containing functional group to another associative group A',
• A', which is identical to or different from A, is an associative group comprising at least one nitrogen atom.

7. Modified polymer according to Claim 6, **characterized in that** the modifying gent is chosen from the compounds of the following formulae (VIII) or (IX):
R'-Z-CO-N=N-CO-Sp-A (VIII)
or
A'-Sp'-CO-N=N-CO-Sp-A (IX)
in which R', Z, Sp, A, Sp' and A' are as defined in the preceding claims and A, Sp and Sp' may contain one or more heteroatoms.

8. Modified polymer according to Claim 7, **characterized in that** the modifying agent is selected from the compounds of the following formulae (X) or (XI): 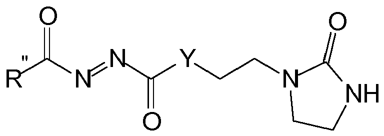 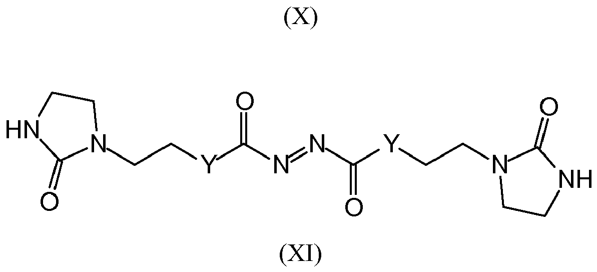 in which:
- Y represents a divalent group chosen from a methylene group, an oxygen or sulphur atom, and a group -NH-, and
- R" represents a C1-C6 alkoxy, preferably a C1-C4 alkoxy, group and most preferably methoxy or ethoxy.

9. Modified polymer according to any one of Claims 1 to 8, **characterized in that** the "spacer" group Sp or Sp' of the modifying agent is selected from -(CH2)y-, -NH-(CH2)y-, -O-(CH2)y-, y being an integer from 1 to 6.

10. Modified polymer according to either of Claims 8 and 9, **characterized in that** the modifying agent is chosen from the compounds of the following formulae (XII) to (XV):

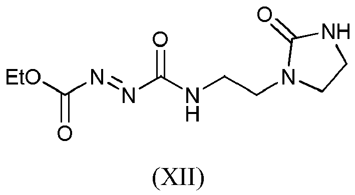

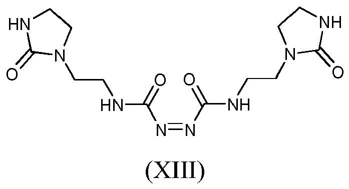

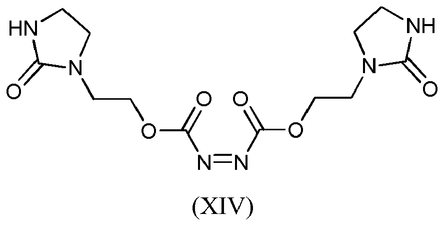

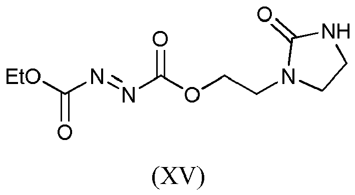

11. Process for preparing a modified polymer comprising a step of grafting onto a polymer containing at least one unsaturation of a compound comprising at least one group Q, and at least one group A bonded together by at least, and preferably, one "spacer" group Sp in which:
- Q comprises an azo-carbonyl-containing group,
- A comprises an associative group comprising at least one nitrogen atom,
- Sp is an atom or a group of atoms forming a bond between Q and A,
by "ene reaction" of a group Q on the said unsaturation.

12. Process for preparing a modified polymer according to Claim 11, **characterized in that** the polymer is a diene elastomer.

13. Process for preparing a modified polymer according to any one of Claims 11 to 12, **characterized in that** the modifying agent is as defined in any one of Claims 1 to 10.

14. Crosslinked or crosslinkable rubber composition comprising a reinforcing filler and a polymer as defined in Claims 1 to 10.

15. Tyre comprising a rubber composition as defined in Claim 14.
